# EUROPEAN PATENT SPECIFICATION

(11) **EP 3 601 400 B1**
(45) Date of publication and mention of the grant of the patent: **21.07.2021**
(21) Application number: 18718668.9
(22) Date of filing: 21.03.2018
(51) Int. Cl.: C08G 18/48, A01M 29/12, C08G 18/64, C08G 18/79, C08G 18/24, C08G 18/40, C08G 18/42

(54) **ODOR DETERRENT FOR REPELLING ANIMALS**
GERUCHSABSCHRECKUNGSMITTEL ZUR ABSCHRECKUNG VON TIEREN
DISPOSITIF DE DISSUASION OLFACTIVE POUR REPOUSSER DES ANIMAUX

(30) Priority: 23.03.2017 CZ 201733543 U; 23.03.2017 CZ 20170166
(43) Date of publication of application: 05.02.2020
(73) Proprietor: Ustav Makromolekularni Chemie AV CR, v.v.i., 162 06 Praha 6 (CZ)
(72) Inventor: BENES, Hynek, 19800 Praha 9 (CZ); HORAK, Pavel, 14000 Praha 4 (CZ); KREDATUSOVA, Jana, 37701 Jindrichuv Hradec (CZ); KRULIS, Zdenek, 15500 Praha 13 (CZ); NEVRKLA, Vlastimil, 10600 Praha 10 (CZ)
(74) Representative: Hartvichova, Katerina
(86) International application number: PCT/CZ2018/050011
(87) International publication number: WO 2018/171820

(56) References cited:
- JP-A- 2011 173 811

## Description

### Field of Art

The present invention relates to odor deterrents for protection against animals, in particular game.

### Background art

Odor deterrents, also known as odor fences, game repellents, or odor game frighteners, have been known and used for more than thirty years to treat the vicinity of selected stretches of roads or agricultural crops from undesired access of animals, in particular game. The deterrents used in the prior art are based on odorous components of various chemical composition and are usually absorbed in a porous support based on hard polyurethane foams. The odor deterrent comprising butyric acid as the active ingredient is described in the document CS 274 109. A significant disadvantage of the system of odor repellent control of the game on the agricultural land is the relatively short-time efficacy of the odorous component, which evaporates rather quickly from the carrier, depending on weather conditions. The results of olfactometric measurements show that after three to four weeks of exposure of the odorous component absorbed in the polyurethane foam to the weather conditions, its concentration decreases in the immediate vicinity of the carrier to such an extent that it no longer has the desired effect on the game. Refilling of the odorous component into the foam carrier is laborious and time-consuming, and moreover, this work is associated with a high risk for the operator of being stained with the odorous component, with very unpleasant consequences.

A significant disadvantage of the polyurethane carriers for the odorous component is their chemical structure. Polyurethane foam exposed to weather conditions is gradually subjected to photooxidation and hydrolytic degradation yielding a wide range of products, including aromatic diamines, especially diphenylmethanediamine. Aromatic diamines are toxic and carcinogenic, and their presence in soil and water threatens the balance of the ecosystem and is therefore totally unacceptable.

An original alternative, which was intended to overcome the drawbacks of the known compositions and is intended primarily for the field treatment of agricultural crops, is a game-repellent granulate disclosed in the French Patent No. 2 772 556. This granulate is based on a shell containing a game-attracting substance surrounding a porous core containing a game-repellent substance. The mechanism of action is based on attracting the game by the fragrance of the attractant substance contained in the granule shell (e.g., corn flour) and, after ingestion of the granules, the game is repelled by the bitter and bad-odorous content of the granule core. This composition, however, apparently did not work in practice, as it is not known to be used in practice.

Thus, there remains a need to prepare an odor deterrent which satisfies the desired function, capable of releasing the odorous component in a long-term controlled and reliable manner at effective concentrations, and leaving no toxic and environmentally unacceptable degradation products of the carrier.

### Disclosure of the Invention

The odor deterrent according to the invention consists of a hollow closed housing (A) having a cavity filled with a porous carrier (B) containing an odorous component (C), wherein
- the housing (A) is made of a biodegradable waterproof polymeric material containing at least 30 wt. % of a component selected from starch ester, polyhydroxybutyrate having the weight average molar mass (M_{w}) of at least 20 000 g/mol, polylactide having the weight average molar mass of at least 10 000 g/mol, polycaprolactone having the weight average molar mass of at least 30 000 g/mol, polyurethane obtained by reacting a polyester or polyether-ester polyol and an aliphatic diisocyanate (i.e., biodegradable polyurethane), and mixtures thereof, and up to 70 wt. % of an inert inorganic filler or a cellulosic filler, and optionally a plastifier,
- the carrier (B) of the odorous component is made of a porous biodegradable polymeric material containing at least 70 wt. % of a component selected from starch, starch ester, cellulose, polyurethane obtained by reacting a polyester or polyether-ester polyol and an aliphatic diisocyanate, and mixtures thereof, and up to 30 wt. % of an inert inorganic filler or a cellulosic filler, and optionally a plastifier, and
- the odorous component (C) is selected from the group consisting of monocarboxylic acids having 4 to 6 carbons in the chain, a mixture of monocarboxylic acids having 4 to 6 carbon atoms in the chain, esters of said monocarboxylic acids, anhydrides of said monocarboxylic acids.

The plastifiers are particularly useful in housings and carriers in which starch esters are present, and can be used in housings and carriers in which polyhydroxybutyrate and/or polylactide are present. Plastifiers are substances that plasticize said components, and suitable plastifiers are known to those skilled in the art. The plastifiers are preferably selected from the group consisting of glycerol acetates, glycerol propionates, methyl esters and ethyl esters of citric acid.

Preferably, the odor deterrent has a shape of a disc having the diameter of 108 to 112 mm, the height of 20 to 35 mm and the weight of 100 to 110 g, and the thickness of the housing (A) is 0.4 mm to 2 mm.

Starch esters are preferably esters of starch with C2-C6 carboxylic acids.

Preferably, the housing (A) of the odor deterrent is made of a thermoplastic material comprising at least 30 wt. % of starch acetate, starch propionate or starch butyrate or mixtures thereof, up to 45 wt. % of a plastifier selected from the group consisting of glycerol acetates, glycerol propionates, citric acid methyl esters and citric acid ethyl esters, and up to 70 wt. % of an inert inorganic filler or a cellulosic filler.

Preferably, the housing (A) of the odor deterrent is made of a thermoplastic material comprising a mixture of starch acetate, starch propionate or starch butyrate or a mixture of these starch esters with poly-ε-caprolactone in the weight ratio of starch ester to poly-ε-caprolactone of 2:3 to 3:1.

Preferably, the carrier (B) of the odorous component is made of an expanded plasticized starch or an expanded starch acetate or starch propionate or starch butyrate or a mixture thereof having the specific weight of up to 0.8 g/cm³ containing up to 45 wt. % of a plastifier selected from the group consisting of glycerol acetates, glycerol propionates, methyl esters and ethyl esters of citric acid.

Preferably, the carrier (B) of the odorous component is made of a polyurethane foam prepared by reacting a polyether ester polyol and an aliphatic polyisocyanate having a specific weight of up to 0.8 g/cm³.

Preferably, the odorous component (C) is present in the carrier (B) in the form of an ester or anhydride of the monocarboxylic C2-C6 acid and is hydrolytically released during the application of the odor deterrent.

The odor deterrent according to the invention is applied to the treated lands so that it is evenly distributed either over the whole area of smaller land plots or on circumferential strip of larger land plots, said strip having a width of at least 20 m. The advantage of the odor deterrent of the present invention is its easy application without the need for installation of stands or other fixed supports, gradual and long-term release of the odorous substance and a biodegradability time equal to or less than the vegetation period of the treated crop. The time of the biodegradability of the odor deterrent according to the invention is adjustable by selecting the material of the housing (A).

### Examples of carrying out the Invention

### Example 1

Starch acetate having the degree of substitution 2.6 was melt-mixed in a kneader with triacetin in the weight ratio 3:1 and subsequently pressed into a 0.5 mm thick plate. From this plate, a hollow housing with a prismatic shape and dimensions 35x42x110 mm was produced by welding. The housing was filled with crushed expanded starch acetate having a bulk density of 350 g/l, 3 ml of isovaleric acid was added to the crushed material and the housing was closed. The odor deterrent was positioned at a height of 1 m above ground level and exposed to weather conditions. Dynamic olfactometry determined the odorous component emission concentration at a distance of 0.6 m from the deterrent, according to the currently applicable norm CSN EN 13 725. The determination was repeated every 30 days. The results were compared with the results of the measurement of a commercially available type of odor deterrent based on polyurethane foam and are shown in Table 1. The biodegradability of the housing material was tested by composting 150x150 mm plates having 0.5 mm thickness in a matured garden soil substrate. After 22 days of exposure at an average soil temperature of 20.9 °C, the weight loss of the plate material was 39.6 %.

### Example 2

Starch acetate having the degree of substitution 2.6, starch propionate having the degree of substitution 2.5 and triacetin were melt-mixed in a kneader in the weight ratio 2: 2: 1 and subsequently pressed into a 0.5 mm thick plate. From the plate, a hollow-disc housing having the diameter of 110 mm and the height of 25 mm was produced by vacuum forming and welding. The cavity of the disc was filled with pellets of expanded plasticized starch having a bulk density of 220 g/l. 3 ml of isovaleric acid was added to the pellets filling the cavity of the disc.

Dynamic olfactometry determined the odorous component emission concentration at a distance of 0.6 m from the deterrent, according to the currently applicable norm CSN EN 13 725. The determination was repeated every 30 days. The results were compared with the results of the measurement of a commercially available type of odor deterrent based on polyurethane foam and are shown in Table 1. The biodegradability of the housing material was tested by composting 150x150 mm plates having 0.5 mm thickness in a matured garden soil substrate. After 22 days of exposure at an average soil temperature of 20.9 °C, the weight loss of the plate material was 43.5 %.

### Example 3

A mixture of 42 g poly(diethylene glycol adipate)triol having a hydroxyl number of 23 mg KOH/g, 21 g polyethylene glycol having a hydroxyl number of 250 mg KOH/g, 2 g Niax™ Silicone L-6900 (Momentive Performance Materials) silicone surfactant, 1.5 g dibutyltin dilaurate (DBTL, Aldrich, Germany), 1.5 g of N,N,N',N",N"-pentamethyldiethylenetriamine (Polycat™ 9, Air Products), 6.6 g of water and 92 g of wheat B-starch were homogenized for 4 minutes in a plastic crucible using a high speed stirrer (2000 rpm). 160 g of aliphatic polyisocyanate Desmodur™ N 3300 (Covestro) was then added to the mixture and the mixture was homogenized for additional 30 seconds. The reaction mixture was then poured into an open mold, freely foamed at 25 °C and then cured at room temperature for 48 hours. From the thus prepared foam block, a porous carrier for the odorous component was produced by cutting out a 35 mm x 42 mm x 110 mm prism.

The porous carrier was injected with 3 ml isovaleric acid and sealed into a hollow housing prepared from a polycaprolactone film. The odor deterrent was fixed at a height of 1 m above ground level and exposed to weather conditions. Dynamic olfactometry determined the odorous component emission concentration at a distance of 0.6 m from the deterrent, according to the currently applicable norm CSN EN 13 725. The determination was repeated every 30 days. The results were compared with the results of the measurement of a commercially available type of odor deterrent based on polyurethane foam and are shown in Table 1.

The biodegradability of the porous support was tested according to ASTM D 5988 in field soil at 21 °C. After 150 days of exposure, the total mineralization of the porous support material was 37.1 %.

### Example 4

A mixture of 13 g of poly(diethylene glycol adipate)diol Songstar™ SS-107 (Songwon) having a hydroxyl number of 107 g KOH/g, 64 g of poly(diethylene glycol adipate)triol having a hydroxyl number of 40 mg KOH/g, 2 g of NiaxTM Silicone L-6900 (Momentive Performance Materials) silicone surfactant, 1.5 g of dibutyltin dilaurate (DBTL, Aldrich, Germany), 1.5 g of N,N,N',N",N"-pentamethyldiethylenetriamine (Polycat™ 9, Air Products), and 6.3 g of water was homogenized for 4 minutes in a plastic crucible using a high speed stirrer (2000 rpm). 144 g of aliphatic polyisocyanate Desmodur ™ N 3300 (Covestro) was then added to the mixture and the mixture was homogenized for additional 30 seconds. The reaction mixture was then poured into an open mold, freely foamed at 25 °C and then cured at room temperature for 48 hours. From the thus prepared foam block, a porous carrier for the odorous component was produced by cutting out a 35x42x110 mm prism.

The porous carrier was injected with 3 ml isovaleric acid and sealed into a hollow housing made of polyhydroxybutyrate foil. The odor deterrent was fixed at a height of 1 m above ground level and exposed to weather conditions. Dynamic olfactometry determined the odorous component emission concentration at a distance of 0.6 m from the deterrent, according to the currently applicable norm CSN EN 13 725. The determination was repeated every 30 days. The results were compared with the results of the measurement of a commercially available type of odor deterrent based on polyurethane foam and are shown in Table 1.

The biodegradability of the porous support was tested according to ASTM D 5988 in field soil at 21 °C. After 150 days of exposure, the total mineralization of the porous support material was 25.1 %.

### Example 5

A mixture of 10 g of poly(diethylene glycol adipate)diol Songstar™ SS-107 (Songwon) having a hydroxyl number of 107 mg KOH/g, 5 g of polyethylene glycol with a hydroxyl number of 250 mg KOH/g, 0.7 g NiaxTM Silicone L-6900 (Momentive Performance Materials) silicone surfactant, 0.6 g of N,N,N',N",N"-pentamethyldiethylenetriamine (Polycat™ 9, Air Products), 2.5 g of water, 0.6 g of dibutyltin dilaurate (DBTL, Aldrich, Germany), 32 g of wheat B-starch and 10 g of isovaleric acid mono-, di- and tri-glyceride mixture, and homogenized in a plastic crucible using a high speed stirrer (2000 rpm) for 4 min. 61 g of aliphatic polyisocyanate Desmodur™ N 3300 (Covestro) was then added and the mixture was homogenized for additional 30 seconds. The reaction mixture was then poured into an open mold, freely foamed at 25 °C and then cured at room temperature for 48 hours . From the thus prepared foam block, a porous carrier for the odorous component was produced by cutting out a 35x42x110 mm prism.

The porous carrier was enclosed in a hollow housing made of a 0.5 mm thick sheet of triacetin-plasticized starch as described in Example 1. The odor deterrent was fixed at a height of 1 m above the ground level and exposed to weather conditions. Dynamic olfactometry determined the odorous component emission concentration at a distance of 0.6 m from the deterrent, according to the currently applicable norm ČSN EN 13 725. The determination was repeated every 30 days. The results were compared with the results of the measurement of a commercially available type of odor deterrent based on polyurethane foam and are shown in Table 1.

The biodegradability of the porous support was tested according to ASTM D 5988 in field soil at 21 °C. After 150 days of exposure, the total mineralization of the porous support material was 35.5%.

### Example 6

The porous carrier was prepared using the composition and procedure set forth in Example 5 except that 10 g isovaleric anhydride was added to the formulation instead of a mixture of isovaleric acid mono-, di- and tri-glycerides. The thus produced porous carrier was enclosed in a hollow housing made of a 0.5 mm thick sheet of triacetin-plasticized starch as described in Example 1. The odor deterrent was fixed at a height of 1 m above the ground level and exposed to weather conditions. Dynamic olfactometry determined the odorous component emission concentration at a distance of 0.6 m from the deterrent, according to the currently applicable norm CSN EN 13 725. The determination was repeated every 30 days. The results were compared with the results of the measurement of a commercially available type of odor deterrent based on polyurethane foam and are shown in Table 1.

The biodegradability of the porous support was tested according to ASTM D 5988 in field soil at 21 °C. After 150 days of exposure, the total mineralization of the porous support material was 33.7%.

**Table 1: Concentration of the odorous component in the vicinity of the odor deterrents produced according to the examples**

| Odor deterrent | Odorous component concentration after mounting of the deterrent [ou_{E}/m³] | Odorous component concentration after 30 days [ou_{E}/m³] | Odorous component concentration after 60 days [ou_{E}/m³] | Odorous component concentration after 90 days [ou_{E}/m³] |
|---|---|---|---|---|
| Comparative product (PUR foam) | 33 | 0 | 0 | 0 |
| Example 1 | 22 | 13 | 10 | 8 |
| Example 2 | 22 | 14 | 10 | 6 |
| Example 3 | 18 | 12 | 10 | 8 |
| Example 4 | 19 | 11 | 9 | 8 |
| Example 5 | 20 | 12 | 9 | 7 |
| Example 6 | 20 | 12 | 11 | 10 |

### Industrial Applicability

The odor of the invention is useful in protecting the land against unwanted access to the game.

## Claims

1. An odor deterrent, **characterized in that** it consists of a hollow closed housing (A) having a cavity filled with a porous carrier (B) containing an odorous component (C), wherein
- the housing (A) is made of a biodegradable waterproof polymeric material containing at least 30 wt. % of a component selected from starch ester, polyhydroxybutyrate having the weight average molar mass of at least 20 000 g/mol, polylactide having the weight average molar mass of at least 10 000 g/mol, polycaprolactone having the weight average molar mass of at least 30 000 g/mol, polyurethane obtained by reacting a polyester or polyether-ester polyol and an aliphatic diisocyanate, and mixtures thereof, and up to 70 wt. % of an inert inorganic filler or a cellulosic filler, and optionally a plastifier,
- the carrier (B) of the odorous component is made of a porous polymeric material containing at least 70 wt. % of a component selected from starch, starch ester, cellulose, polyurethane obtained by reacting a polyester or polyether-ester polyol and an aliphatic diisocyanate, and mixtures thereof, and up to 30 wt. % of an inert inorganic filler or a cellulosic filler, and optionally a plastifier, and
- the odorous component (C) is selected from the group consisting of monocarboxylic acids having 4 to 6 carbons in the chain, a mixture of monocarboxylic acids having 4 to 6 carbon atoms in the chain, esters of said monocarboxylic acids, anhydrides of said monocarboxylic acids.

2. The odor deterrent according to claim 1, wherein the housing (A) has the shape of a disc having a diameter of 108 to 112 mm, a height of 20 to 35 mm and a weight of 100 to 110 g and a thickness of the housing (A) is within the range of 0.4 mm to 2 mm.

3. The odor deterrent according to claim 1 or 2, wherein the starch esters are esters of starch with C2-C6 carboxylic acids.

4. The odor deterrent according to claim 1 or 2, wherein the housing (A) is made of a thermoplastic material containing at least 30 wt. % of starch acetate, starch propionate or starch butyrate or mixtures thereof, and up to 45 wt. % of a plastifier selected from the group consisting of glycerol acetates, glycerol propionates, citric acid methyl esters and ethyl esters and up to 70 wt. % of inert inorganic filler or cellulosic filler.

5. The odor deterrent according to claim 1 or 2, wherein the housing (A) is made of a thermoplastic material containing a mixture of starch cetate or starch propionate or starch butyrate or a mixture of said starch esters with poly-ε-caprolactone in the weight ratio of the starch ester and poly-ε-caprolactone of 2: 3 to 3: 1.

6. The odor deterrent according to any one of claims 1 to 5, wherein the carrier (B) of the odorous component is made of expanded plastifed starch, or of expanded starch acetate or propionate or butyrate or mixtures thereof having a specific weight of up to 0.8 g/cm³, containing up to 45 wt. % of a plastifier selected from the group consisting of glycerol acetates, glycerol propionates, methyl esters and ethyl esters of citric acid.

7. The odor deterrent according to any one of claims 1 to 5, wherein the carrier (B) of the odorous component is made of a foamed polyurethane prepared by reacting a polyether-ester polyol and an aliphatic polyisocyanate having a specific weight of up to 0.8 g/cm³.

8. The odor deterrent according to any one of claims 1 to 7, wherein the odorous component (C) is present in the carrier (B) in the form of an ester or anhydride of the monocarboxylic C2-C6 acid and is hydrolytically releasable during the application period of the odor deterrent.

## Patentansprüche

1. Geruchsabschreckungsmittel, **dadurch gekennzeichnet, dass** es aus einem hohlen geschlossenen Gehäuse (A) mit einem Hohlraum besteht, der mit einem porösen Träger (B) gefüllt ist, der eine Geruchskomponente (C) enthält, wobei
- das Gehäuse (A) besteht aus einem biologisch abbaubaren wasserdichten Polymermaterial mit einem Gehalt von mindestens 30 Gew.-% einer Komponente ausgewählt aus Stärkeester, Polyhydroxybutyrat mit einem gewichtsmittleren Molekulargewicht von mindestens 20.000 g/mol, Polylactid mit einem gewichtsmittleren Molekulargewicht von mindestens 10.000 g/mol, Polycaprolacton mit einem gewichtsmittleren Molekulargewicht von at mindestens 30 000 g/mol, Polyurethan erhalten durch Umsetzung eines Polyester- oder Polyetheresterpolyols und eines aliphatischen Diisocyanats, und Mischungen davon, und bis zu 70 Gew.-% eines inerten anorganischen Füllstoffs oder eines cellulosischen Füllstoffs und gegebenenfalls eines Weichmachers,
- der Träger (B) der Geruchskomponente aus einem porösen Polymermaterial besteht, das enthält mindestens 70 Gew.-% einer Komponente ausgewählt aus Stärke, Stärkeester, Zellulose, Polyurethan erhalten durch Umsetzen eines Polyester- oder Polyetheresterpolyols und eines aliphatischen Diisocyanats, und Mischungen davon, und bis zu 30 Gew.-% eines inerten anorganischen Füllstoffs oder eines cellulosischen Füllstoffs und gegebenenfalls eines Weichmachers, und
- die Geruchskomponente (C) ausgewählt ist aus der Gruppe bestehend aus Monocarbonsäuren mit 4 bis 6 Kohlenstoffatomen in der Kette, einem Gemisch von Monocarbonsäuren mit 4 bis 6 Kohlenstoffatomen in der Kette, Estern der Monocarbonsäuren, Anhydriden der Monocarbonsäuren.

2. Geruchsabschreckung nach Anspruch 1, worin das Gehäuse (A) die Form einer Scheibe mit einem Durchmesser von 108 bis 112 mm, einer Höhe von 20 bis 35 mm und einem Gewicht von 100 bis 110 g aufweist, und eine Dicke von das Gehäuse (A) liegt im Bereich von 0,4 mm bis 2 mm.

3. Geruchsabschreckungsmittel nach Anspruch 1 oder 2, worin die Stärkeester Ester der Stärke mit C2-C6-Carbonsäuren sind.

4. Geruchsabschreckungsmittel nach Anspruch 1 oder 2, worin das Gehäuse (A) aus einem thermoplastischen Material besteht, das mindestens 30 Gew.-% Stärkeacetat, Stärkepropionat oder Stärkebutyrat oder Mischungen davon und bis zu 45 Gew.-% eines Weichmachers ausgewählt aus der Gruppe bestehend aus Glycerinacetaten, Glycerinpropionaten, Zitronensäuremethylestern und -ethylestern und bis zu 70 Gew.-% inerter anorganischer Füllstoff oder zellulosehaltiger Füllstoff enthält.

5. Geruchsabschreckungsmittel nach Anspruch 1 oder 2, worin das Gehäuse (A) aus einem thermoplastischen Material hergestellt wird, das eine Mischung aus Stärkeacetat oder Stärkepropionat oder Stärkebutyrat oder eine Mischung der Stärkeester mit Poly-s-caprolacton in das Gewichtsverhältnis von Stärkeester und Poly-s-caprolacton von 2:3 bis 3:1 enthält.

6. Geruchsabschreckungsmittel nach einem der Ansprüche 1 bis 5, worin der Träger (B) der Geruchskomponente hergestellt wird aus expandierter plastifizierter Stärke oder aus expandiertem Stärkeacetat oder -propionat oder -butyrat oder Mischungen davon mit einem spezifischen Gewicht bis zu 0,8 g/cm³, mit bis zu 45 Gew.-% eines Weichmachers ausgewählt aus der Gruppe bestehend aus Glycerinacetaten, Glycerinpropionaten, Methylestern und Ethylestern der Zitronensäure.

7. Geruchsabschreckungsmittel nach einem der Ansprüche 1 bis 5, worin der Träger (B) der Geruchskomponente hergestellt wird aus einem geschäumten Polyurethan, das durch Umsetzen eines Polyetheresterpolyols und eines aliphatischen Polyisocyanats mit einem spezifischen Gewicht von bis zu 0,8 g/cm³.

8. Geruchsabschreckungsmittel nach einem der Ansprüche 1 bis 7, wobei die Geruchskomponente (C) im Träger (B) in Form eines Esters oder Anhydrids der C2-C6-Monocarbonsäure vorliegt und während die Einwirkzeit des Geruchsabschreckungsmittels hydrolytisch freisetzbar ist.

## Revendications

1. Dissuasif odorant, **caractérisé en ce qu'**il est constitué d'un boîtier fermé creux (A) ayant une cavité remplie d'un support poreux (B) contenant un composant odorant (C), où
- le boîtier (A) est constitué d'un matériau polymère imperméable biodégradable contenant au moins 30 % en poids d'un composant choisi parmi l'ester d'amidon, le polyhydroxybutyrate ayant la masse molaire moyenne en poids d'au moins 20 000 g/mol, le polylactide ayant la masse molaire moyenne en poids d'au moins 10 000 g/mol, la polycaprolactone ayant la masse molaire moyenne en poids d'au au moins 30 000 g/mol, polyuréthane obtenu par réaction d'un polyester ou polyéther-ester polyol et d'un diisocyanate aliphatique, et leurs mélanges, et jusqu'à 70 % en poids d'une charge minérale inerte ou d'une charge cellulosique, et éventuellement d'un plastifiant,
- le support (B) du composant odorant est constitué d'un matériau polymère poreux contenant au moins 70 % en poids d'un composant choisi parmi l'amidon, l'ester d'amidon, la cellulose, le polyuréthane obtenu par réaction d'un polyester ou un polyéther-ester polyol et d'un diisocyanate aliphatique, et leurs mélanges, et jusqu'à 30 % en poids d'une charge inorganique inerte ou d'une charge cellulosique, et éventuellement d'un plastifiant, et
- le composant odorant (C) est choisi dans le groupe constitué par les acides monocarboxyliques ayant 4 à 6 carbones dans la chaîne, un mélange d'acides monocarboxyliques ayant 4 à 6 atomes de carbone dans la chaîne, les esters desdits acides monocarboxyliques, les anhydrides desdits acides monocarboxyliques.

2. Dissuasif odorant selon la revendication 1, où le boîtier (A) a la forme d'un disque ayant un diamètre de 108 à 112 mm, une hauteur de 20 à 35 mm et un poids de 100 à 110 g et une épaisseur de le boîtier (A) est dans la plage de 0,4 mm à 2 mm.

3. Dissuasif odorant selon la revendication 1 ou 2, où les esters d'amidon sont des esters d'amidon avec des acides carboxyliques en C2-C6.

4. Dissuasif odorant selon la revendication 1 ou 2, où le boîtier (A) est constitué d'un matériau thermoplastique contenant au moins 30 % en poids. % d'acétate d'amidon, de propionate d'amidon ou de butyrate d'amidon ou de leurs mélanges, et jusqu'à 45 % en poids d'un plastifiant choisi dans le groupe constitué d'acétates de glycérol, de propionates de glycérol, d'esters méthyliques d'acide citrique et d'esters éthyliques d'acide citrique et jusqu'à 70 % en poids de charge inorganique inerte ou de charge cellulosique.

5. Dissuasif odorant selon la revendication 1 ou 2, où le boîtier (A) est constitué d'un matériau thermoplastique contenant un mélange de acétate d'amidon ou de propionate d'amidon ou de butyrate d'amidon ou un mélange desdits esters d'amidon avec de la poly-ε-caprolactone dans le rapport pondéral de l'ester d'amidon et de la poly-ε-caprolactone de 2:3 à 3:1.

6. Dissuasif odorant selon l'une quelconque des revendications 1 à 5, où le support (B) du composant odorant est constitué d'amidon plastifié expansé, ou d'acétate ou propionate ou butyrate d'amidon expansé ou de mélanges de ceux-ci ayant un poids spécifique allant jusqu'à à 0,8 g/cm³, contenant jusqu'à 45 % en poids d'un plastifiant choisi dans le groupe constitué par les acétates de glycérol, les propionates de glycérol, les esters méthyliques et les esters éthyliques d'acide citrique.

7. Dissuasif odorant selon l'une quelconque des revendications 1 à 5, où le support (B) du composant odorant est constitué d'une mousse de polyuréthane obtenue par réaction d'un polyéther-ester polyol et d'un polyisocyanate aliphatique ayant un poids spécifique allant jusqu'à 0,8 g/cm³.

8. Dissuasif odorant selon l'une quelconque des revendications 1 à 7, où le composant odorant (C) est présent dans le support (B) sous la forme d'un ester ou d'un anhydride de l'acide monocarboxylique en C2-C6 et est libérable par hydrolyse pendant la période d'application du dissuasif odorant.
